Europäisches Patentamt

European Patent Office

Office européen des brevets

(19)

(11) Publication number: **0 052 166**
**B1**

(12) **EUROPEAN PATENT SPECIFICATION**

(45) Date of publication of patent specification: **26.02.86**

(51) Int. Cl.⁴: **C 04 B 26/04, C 04 B 26/06**

(21) Application number: **80304109.4**

(22) Date of filing: **14.11.80**

(54) Process for the preparation of polymer bonded concretes.

(43) Date of publication of application:
26.05.82 Bulletin 82/21

(45) Publication of the grant of the patent:
26.02.86 Bulletin 86/09

(84) Designated Contracting States:
AT BE CH DE FR GB IT LI LU NL SE

(56) References cited:
DE-A-1 912 467

CHEMICAL ABSTRACTS, vol. 90, 1979, page 26, abstract 152994y Columbus, Ohio, USA P.V. BONSIGNORE et al. "Alumina trihydrate and other inorganic flame retardant additives for glass fiber-reinforced polyester plastics"

CHEMICAL ABSTRACTS, vol. 72, 1970, page 30, abstract 15664a, Columbus, Ohio, USA W.G. WOODS et al. "Firebrake ZB, a new fire-retardant additive"

(73) Proprietor: PLASTIBETON CANADA INC
5600 Hochelaga Suite 300
Montreal Quebec H1N 3L7 (CA)

(72) Inventor: Trent, Peter F.
49 Rosemount Avenue
Westmount Quebec (CA)
Inventor: Charlebois, Raymond
46 Les Ormes
Laval, Sur-le-Lac Quebec (CA)

(74) Representative: Lawrence, Peter Robin
Broughton et al
GILL JENNINGS & EVERY 53-64 Chancery Lane
London WC2A 1HN (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to polymer concretes having very low polymer binder levels.

Concretes manufactured with synthetic organic binders are known. These non-hydraulic concretes have superior properties once the binders are cured and fused with the inorganic components to produce a hardened mass. They are used in the production of precast elements for architectural or engineering applications or for cast-in-place uses, where strength, water and chemical resistance or speed of cure are desirable. The binder used is a catalysed monomeric or resinous component and a variety of methods are known for mixing the binder with the inorganic material and achieving polymerisation or curing.

Although polymer bonded concretes are now well-known, there are some major drawbacks to the use of many of them. These drawbacks are high cost, low modulus of elasticity, poor fire resistance, limited surface effects that can be achieved for architectural purposes, high shrinkage on curing resulting in curling or cracking, high exothermic reaction on curing leading to internal stresses and poor processibility in some cases due to the viscous nature of the liquid phase used. Such disadvantages are the result of the inability to reduce the organic binder component significantly below a level of about 10—15 percent by weight of the concrete particularly with respect to large structural items without causing other serious problems such as low compressive and tensile strengths, poor resistance to wear and sensitivity to impact. Low binder levels are however incidentally disclosed for some processes of making polymer concrete but other disadvantages are attendant thereon. For instance, some such processes have been used only in limited applications such as patching of roadways and the like. With others, the processes are complex or limited to special conditions which are not commercially attractive. Discussion of such technology is included in the following.

The use of low polymer binder levels in different types of compositions containing inorganic solids is known. For example, U.S. Patent 2,991,267 discloses a granular material for use in making moulds for metal casting. Sand is coated with a thermosetting resin, the amounts of binder necessary being disclosed as one half to five percent by weight. This patent is however not helpful in respect of polymer concretes and decreasing the resin binder levels therein, in that foundry moulds are very porous articles and the strength considerations are not at all similar.

U.S. Patent 3,070,557 discloses aggregates and fillers bonded with polymers, e.g. polyolefins and copolymers thereof, which compositions are primarily intended to serve as paving compositions of the asphalt type. No data are given as to strength measurements. Although the proportions of binder used are disclosed as 1—10% by weight of solid, preferably 2—8%, the method of application favoured is hot plastic mixing, but even at the temperature used, the polymeric binder still has significantly high viscosity. This patent also is not of help in decreasing the level of the binders used in polymer concretes where high strength properties are required.

In fact, attempts have been made with polyester type concretes to mix the resin binder with the inorganic solids using a low level of binder by first heating the resin in order to reduce its viscosity. Theoretically this would enable mixing of low amounts of binder with the inorganic solids and still provide proper distribution throughout the composition. However, addition of catalyst, fillers, and sand on a continuous basis is required because of the increased reactivity of the heated resin. This necessitates complex machinery and results in relatively low delivery rates. Furthermore, the viscosity reduction of the binder even on heating is not enough to achieve substantially lower resin levels.

Another patent wherein low binder levels are used with inorganic solids is U.S. Patent 3,243,388 which relates to a plastic bonded concrete. However, although low binder levels are suggested the reference is concerned with compositions wherein the spaces between the mineral aggregates contain closed cell expanded or foamed plastics, e.g. polyurethane and polystyrene foams. This type of "concrete" is a very light-weight material and the strength characteristics as compared to polymer concretes using non-foamed resins are completely different.

The specific problem of binder level in polymer bonded concretes has been dealt with in U.S. Patent 3,801,536. This reference discloses that the viscosity of the polymeric binder, i.e. epoxy or polyester resin, for use with various aggregates and fillers can be affected by the use of a micronic inorganic filler e.g. titanium dioxide having particle size below two $\mu$m and high shape regularity. This patent discloses that with such material the amount of resin which can be used in the case of polyester resins is lowered to 7—13% by weight of the composition and 2—7% by weight with epoxy resins. The main disadvantage to the use of this method of lowering binder levels in polymer concrete is that the micronic fillers required are 2 to 4 times as expensive as the resin binder by volume.

There are a number of references relating to polymer concrete technology wherein monomers are mixed with aggregates and fillers and in situ polymerisation carried out to form the polymer concrete product.

U.S. Patent 3,856,054 of Steinberg et al, for example, relates to glass polymer composites and the preparation of them. Crushed glass is used as the solid material and the monomer which is polymerised in situ is methyl methacrylate. A very specific process is disclosed whereby the glass mixture is first poured into a mould and the monomer is added through the bottom of the mould to fill the voids and then polymerisation carried out. A binder level of 7% by weight of composition is disclosed.

There is a series of Brookhaven National Laboratory Reports and the like which deals with polymer concrete technology. These reports are as follows:

Fontana et al, "Rapid Patching of Deteriorated Concrete", 2nd International Congress on Polymers in Concrete (November 1978).

Kukacka et al, "Polymer Concrete Patching Materials", Final Report (April 1977) FHWA01P77-11. Vol. 2.

Kukacka et al, "Polymer Concrete Patching Materials Users Manual" (April 1977), BNL 22361.

Kukacka et al, "Concrete-Polymer Materials for Highway Applications, Final Report" (June 1975), BNL 50462.

Kukacka et al, "The Use of Polymer-Concrete for Bridge Deck Repairs on the Major Deegan Expressway" (January 1975), BNL 19672.

Kukacka et al, "Concrete-Polymer Materials for Highway Applications" (December 1973) BNL 50417.

DePuy et al, "Concrete-Polymer Materials" (December 1973) BNL 50390.

Dikeou, "Concrete-Polymer Materials—Third Topical Report" (January 1971) REC-ERC-71-6 and BNL 50275, (T-602), pp. 1—3, 12, 15—19, and 105—107.

Kukacka et al, "Concrete-Polymer Materials—Fourth Topical Report" (January 1972) REC-ERC-72-10 and BNL 50328.

These reports in general, except for DePuy et al, deal with the use of impregnation of concrete with monomer and *in situ* polymerisation and the use of polymer concrete as patching material on roadways and the like. As the patching material the article disclose mainly the use of a specific monomer system or unsaturated polyester in styrene system mixed with aggregate, conventional equipment being used to mix and place the material. Generally the binder content is greater than 10% by weight of the composition particularly for the one example of pouring of a slab of polymer concrete. Generally also ambient curing temperatures are disclosed and the only reference to the use of vibration for placing, in the overall context of the development work reported, teach a way from much use of vibration at all in order to avoid segregation of monomer and aggregates.

The DePuy et al report deals with preparation of polymer concrete articles by *in situ* polymerisation of certain monomer systems with reference to the work of earlier reports (BNR 50328 and 50275) teaching that only an "impregnation" type of technique, that is, where monomer is fed into a mould containing aggregate or aggregate added to monomer in a mould, is feasible. Although low binder levels are reported, the work deals only with very small mouldings of polymer concrete.

There is another series of articles in polymer concrete technology which articles are as follows:

Koblischek, "Acryl-Concrete", 2nd International Congress on Polymers in Concrete, (November 1978).

Koblischek, "Acrylic Concrete and its Application", 4th International Reaction—Resin Concrete Seminar (1977).

Koblischek, "Synthetic Resin-Bound Concrete", Proceedings of the First International Congress on "Polymer Concretes", (1976).

Koblischek, "Synthetic-Resin-Bonded Concrete", Betonstein-Zeitung, (1971).

These articles relate to the preparation of a polymer concrete using in situ polymerisation of a particular system. They disclose the use of binder components of low viscosity to be mixed with the aggregate. The articles are specific to the use of a polymethyl methacrylate resin which can only be dissolved in methyl methacrylate monomer because of the low viscosity levels used and the mention that no solvent is present. The lowest proportion of binder mentioned is 7.3% by weight of composition. Conventional mixing equipment is used and vibration is discussed but high frequency vibration is indicated in order to avoid jolting vibrations and hence segregation of ingredients.

DE—A—1912467 describes producing polymer bonded concrete by mixing aggregate with liquid binder comprising polyester and styrene and casting the mixture, shaking it and adding further filler.

Finally there is an article in "Kunststoffe im Bau", Volume 6, 1974, by T. Hornikel entitled "Polyester Resin as a Binder for Concrete and Artificial Stone". This article deals with the use of unsaturated polyester resins as binders for polymer concrete. It is suggested that the viscosity of the resin can be reduced for mixing with aggregates by the addition of styrene but it is only suggested that the viscosity be reduced to about 200 centipoises. Generally a resin level of 8 to 12 percent is disclosed although one reference is made to a lower amount. The article directs away from heat curing and makes no mention of vibration. The products generally have low modulus of elasticity values.

Thus, a substantial amount of work has been reported in the field of polymer concrete. However, it has now been found that very low binder levels in high strength polymer bonded concrete can be achieved by a specific method which is simple to carry out and has wide applicability as it can be applied to very large mouldings of polymer concrete, as for example a curved precast panel 5.33 metres (17½ feet) by 2.13 metres (7 feet) by 2.54 cm (1 inch) thick at a binder level of 6.7% by weight of composition. The method utilises specific components and a very specific sequence of steps. Generally the method includes mixing certain monomeric materials with the inorganic components, together with polymerisation initiator and allowing polymerisation to occur as the setting process. The low viscosity of the liquid phase permits the .mixing in of enough sand, fillers, and aggregates to obtain binder levels of 5—10% by weight and as low as 3%. Proper distribution of the binder material and resultant strength of the concrete product is achieved by intense vibration of the mixed components to obtain maximum packing of the solids and segregation of components either before or during the setting process. Setting is generally accelerated or initiated by the application of heat, and promotors and the like may be used.

Broadly, the invention provides a polymer concrete having high strength characteristics comprising an aggregate consisting of sand, stone or gravel or mixtures thereof and an organic binder in an amount of about 3 to about 10% by weight of the concrete, the organic binder consisting of polymer formed *in situ* from one or more $\alpha,\beta$-ethylenically unsaturated monomers generally of the group of styrene, styrene derivatives, $C_{1-8}$ alkyl esters of acrylic or methacrylic acids, and divinyl benzene, or a low viscosity solution of an unsaturated polyester in the monomers, the solution containing monomer in excess of that required for cross-linking the polyester.

A process according to the invention for the preparation of a polymer bonded concrete formed of mineral aggregate bonded with less than 10% organic binder comprises mixing the aggregate with liquid binder composition comprising polymerisable material and free radical polymerisation initiator, casting the resultant mixture, and polymerising the polymerisable material and is characterised in that the polymerisable material is a liquid $\alpha,\beta$-ethylenically unsaturated monomer and, optionally, a liquid unsaturated polyester resin in an amount such that there is more monomer than is required for cross-linking the polyester resin, and is further characterised in that while the polymerisable material is still substantially unpolymerised the cast mixture is subjected to intense vibration, the viscosity of the liquid binder being sufficiently low and the vibration being sufficiently intense that liquid binder separates from the aggregate and a layer of liquid binder forms on the upper surface of the mixture. Generally the mixture contains 3 to 10% by weight, based on the total weight of the mixture, of liquid binder composition and this composition generally consists substantially only of the initiator and the polymerisable material or materials.

Preferred processes for the preparation of a polymer bonded concrete of low binder content comprise:

(1) mixing an aggregate consisting of sand, stone, or gravel or mixtures thereof with, as binder components,

(a) one or more $\alpha,\beta$-ethylenically unsaturated monomers of the group of styrene, styrene derivatives, $C_{1-8}$ alkyl esters of acrylic or methacrylic acids, or divinyl benzene, or an unsaturated polyester dissolved in one or more of the monomers, the solution of monomer and polyester being of low viscosity and containing monomer in excess of that required for cross-linking purposes, and

(b) a free radical polymerisation initiator, to form a mixture of aggregate with binder components;

(2) casting the mixture;

(3) subjecting the mixture to intense vibration to pack solids therein to occupy the minimum possible volume; and

(4) allowing the monomers to polymerise and set to produce the polymer bonded concrete.

One particularly preferred process is for the preparation of a polymer bonded concrete containing from 3 to less than 10% of organic binder material and comprises:

(1) mixing an aggregate generally consisting of sand, stone, or gravel or mixtures thereof with binder components comprising (and generally consisting wholly or mainly of)

(a) an unsaturated polyester resin dissolved in styrene monomer, the solution being of low viscosity and containing additional monomer in excess of that required for cross-linking of the polyester, the additional monomer being selected from the group styrene, methyl methacrylate and butylacrylate, and

(b) a free radical polymerisation initiator, to form a mixture of the aggregate and the binder components;

(2) casting the mixture;

(3) subjecting the mixture to intense vibration; and

(4) causing the monomers to polymerise by the application of heat to produce the polymer bonded concrete.

Another particularly preferred process is for the preparation of a polymer bonded concrete containing from 3 to less than 7% of organic binder material and comprises:

(1) mixing an aggregate generally consisting of sand, stone or gravel or mixtures thereof with binder components comprising (and generally consisting wholly or mainly of)

(a) methyl methacrylate monomer, and

(b) a free radical polymerisation initiator, to form a mixture of the aggregate and the binder components;

(2) casting the mixture;

(3) subjecting the mixture to intense vibration; and

(4) causing the monomers to polymerise by the application of heat to produce the polymer bonded concrete.

Broadly the process can give a concrete of high strength, high modulus of elasticity, low thermal expansion and contraction, good fire resistance and low shrinkage on curing and the cost can be low.

One would expect by the use of monomers and

*in situ* polymerisation that high shrinkage would occur as the monomers used inherently shrink far more during polymerisation than occurs during curing of, for example, a polyester resin used alone as binder. For instance, the shrinkage that occurs in polymerisation of methyl methacrylate to polymethyl methacrylate is 20—22%. In fact, however, when the present method is used, the retraction of the concrete is less than occurs in the preparation of conventional polymer bonded concretes prepared from resins and aggregates. Furthermore, the stress cracking that is normally associated with the exotherm produced by the curing of high-resin concretes is absent. The concrete also "places" better than hydraulic concrete, allowing casting in moulds as thin as 1.27 cm. Furthermore, standard concrete mixing and placing equipment may be used.

Because of the decreased levels of binder which may be used in the concrete according to the present invention, the total cost of the concrete often can be halved with no untoward effects on mechanical properties. For example, a formulation containing 3.5 percent unsaturated polyester dissolved in styrene (72:28) by weight, 3.1 percent methylmethacrylate, 0.08% initiator and 93% graded silica fillers, sand and aggregates has provided a concrete of 2750 p.s.i. (192.5 kg/cm$^2$) in flexion, 13,500 p.s.i. (945 kg/cm$^2$) in compression strength, having resistance to at least 2,500 cycles of freeze and thaw with little drop-off in properties because it absorbs only 0.1% water. The modulus of elasticity, 6.6×10$^6$ p.s.i. (or 46.2×10$^4$ kg/cm$^2$) is at least twice as high as that of conventional polyester bonded concretes. High modulus of elasticity is important particularly for large structural items such as flat panels as the higher the modulus of elasticity the greater the span that such panel can cover between supports. The weathering resistance is also improved in that a concrete such as aforementioned exhibited no change in appearance after 2500 hours in a weathermeter. Furthermore such polymer concrete has a linear thermal expansion and contraction comparable to that exhibited by conventional hydraulic concrete or steel e.g. 11.7×10$^{-6}$/°C whereas conventional polymer concrete having high binder level exhibits values of linear thermal expansion and contraction up to twice the aforementioned figure.

The binder is the only flammable component in polymer bonded concretes and as according to the present invention the proportion of the binder component is considerably reduced, the fire resistance is greatly improved. Furthermore, replacement of conventional fillers of smaller size with certain materials even further improves the fire resistant properties as will be detailed later herein.

The aggregates which can be used in the present process are sands, stone and gravel which are normally used for making concrete with hydraulic binders. The aggregates may be screened or crushed, preferably with not too many fines.

Fillers which are comminuted solids can be added to the actual aggregates as granulated material of particle size less than the aggregates. Silica is advantageously used because of its low price, low porosity and relatively great hardness. Examples of suitable types of silica are silica flour and Ottawa silica. Also among fillers which may be used are treated and untreated calcium carbonates. The percentage of the filler or extender which is used is determined for any given aggregate by a technique analogous to that used in the production of hydraulic cements and mortars. It consists for a given aggregate in testing various proportions of aggregates and extender in a system of the binder composition of interest. The quantity of the extender chosen will be that which corresponds substantially to the maximum of resistance to compression and of flexion. The fillers mentioned are not intended to be limiting as any fillers known in the art of concrete manufacture may be used.

Other materials may be added, as for example titanium dioxide or iron oxides or other materials for pigmentation.

It has been found that by replacement of smaller size fillers (e.g. 44—220 μm) with certain compounds, fire retardancy of the products is greatly increased over and above that achieved by reduction in the amount of binder used. These compounds may be any powdered substance which releases water of crystallisation at high temperatures as for example alumina trihydrate, tricalcium aluminate hexahydrate and zinc borate. The amount of such materials which is required to provide maximum fire retardancy is in general about twice the amount of resin binder that is used. Thus in the conventional polymer concretes prohibitive amounts of these materials must be used, but with the concretes according to the present invention having low polymer binder content there is a corresponding decrease in the amount of fire retardant compound which is necessary to obtain maximum retardancy. Generally levels of 20—200% by weight based on binder greatly improves fire resistance of the concrete.

It has already been indicated in general that the monomers which may be used are α,β-ethylenically unsaturated monomers, i.e. styrene and styrene derivatives, divinyl benzene and C$_{1-8}$ alkyl esters of acrylic and methacrylic acids. Examples of these monomers are styrene itself, lower alkyl substituted styrenes as for instance α-methyl styrene and vinyl toluene, divinyl benzene, methyl acrylate, ethyl acrylate, isopropyl acrylate, butyl acrylate, 2-ethylhexyl acrylate, methyl methacrylate, ethyl methacrylate, isopropyl methacrylate, butyl methacrylate and the like. These monomers may be used alone or in combination and the preferred monomers, particularly from the point of view of cost, are styrene, methyl methacrylate and butyl acrylate. Suitably, others of the monomers may be combined with the preferred monomers to modify the properties of the binder and as such can be used in minor amounts.

Also other monomers in addition to those mentioned and cross-linking agents may be included in relatively low proportions to alter properties of the binder, as for instance to improve adhesion or increase glass transition temperature. Examples of these monomers and cross-linking agents are acrylic acid, methacrylic acid, 1,3-butylene dimethacrylate, trimethylolpropane trimethacrylate, diethyl phthalate, dibutyl phthalate and diallyl phthalate.

The foregoing monomers can be used as such or can be used to dissolve a certain proportion of unsaturated polyester. These unsaturated polyesters are condensation products of polyalcohols and unsaturated dibasic acids and are general purpose medium reactive resins conventionally used in the polymer concrete and fibre glass fields as binders. Examples are "Palatal" H-170 (obtainable from BASF Canada Ltd.) and "Laminac" 4193 (obtainable from Cyanamid of Canada) which are unsaturated polyester resins dissolved in styrene, there being incorporated in the resin about 1 part of maleic anhydride for every 2 parts of styrene. "Paraplex" P-444A (obtainable from Rohm & Haas Company Canada Ltd.) is a similar suitable unsaturated polyester. "Palatal", "Laminac" and "Paraplex" are trade marks.

It is known to add material such as styrene to unsaturated polyester resins and in fact they are supplied by chemical suppliers diluted with sufficient styrene for eventual cross-linking of the polyester. The proportions supplied are usually about 70 parts by weight polyester to 30 parts by weight styrene. The viscosity of such diluted resins is still far greater than 1000 mPa . s (1000 cps).

By the further dilution according to the present process with monomers as aforementioned viscosities of 50 mPa . s (cps) down to less than 1 mPa . s (cps) are obtained. Such diluted polyesters provide more monomer than is required for cross-linking of the polyester and when used according to the present invention polymerisation of that monomer occurs as well as the cross-linking reaction. Obviously when an unsaturated polyester resin is not used, the viscosity of the monomer components is negligible when compared to the use of preformed resin binders and cross-linking is not involved.

For the purpose of the present process it has been found possible to use proportions of unsaturated polyester resin dissolved in monomers so long as the viscosity of the solution in the monomers is low, preferably not exceeding about 50 cps. In terms of proportion by weight, the polyester resin can constitute up to about 50% by weight of the binder components, and is preferably 40% by weight or less.

As indicated previously the amount of binder component which can be used according to the present process is generally between 5 and 10% by weight of the composition, but even lower proportions are suitably down to about 3%. The low viscosity of the liquid organic phase permits mixing in of high levels of aggregates, fillers and sand and other inorganic components and the low surface tension of the liquid phase allows intimate contact between the organic particles. Because of the low proportions of liquid used, it is not so much the liquid phase that provides the characteristics of curing and of the final product but rather a product is provided which is a nearly inorganic, nearly monolithic structure with particles of sand and aggregate intimately adhering to each other. The final product has in fact more of the characteristics of granite or stone than plastic, or for that matter even hydraulic concrete.

The polymerisation initiators which are added according to the present process are free radical type initiators which will effect polymerisation of the monomers, and where applicable, cross-linking of the polyester resins used. These initiators may be either those which are active at room temperature or at increased temperatures. An example for use at room temperature is benzoyl peroxide together with nitrogen containing promoters such as N,N-diethyl-m-toluidine and N,N-dimethylaniline. An example of an initiator for use at elevated temperature is bis - 4 - tertiaryl - butylcyclohexyl peroxy-dicarbonate. The use of heat activated initiators and heat during setting of the concrete is of advantage in that it permits a longer pot-life of the fresh concrete mix. Other examples of appropriate initiators will immediately occur to those skilled in the art. The proportions of initiator will generally be 0.1 to 5% by weight of other binder components.

As indicated previously standard concrete mixing and placing equipment may be used for the concrete according to the present process. For precast concrete compounds, the moulds used are preferably closed moulds although open moulds are possible. The reason for this is partly because of volatility of the monomers as heat is generally used to effect setting and also the use of closed moulds prevents warping because heat can be applied from both sides and a more uniform polymerisation obtained. If closed moulds are used, it is not necessary that the mould be completely closed and by closed moulds can be meant as well as a mould with up to 10—30% of the concrete surface area being exposed.

It is standard practice in the manufacture of regular precast concrete to vibrate the concrete in order to place it and bring to the surface any air entrapped while mixing or pouring. The use of vibration in the process of the present invention is essential for those reasons and also for others, another being the achievement of minimum volume occupied by the aggregates or placement of the aggregates without voids. By reducing the viscosity of the liquid phase preferably to something of the order of less than 1 mPa . s (centipoise) with concomitant reduction in surface tension the aggregates can settle freely on vibration and orient themselves in what inevitably turns out to be the most compact placement. This of course cannot be achieved with viscous binders. Since this procedure allows solids to impinge on solids, the shrinkage normally associated with increasing monomer level and conversion to polymer is not experienced. In the case of hydraulic concrete, over-vibration leads to segregation of the mix which is undesirable.

By contrast, over-vibration causing segregation is required for the present process and is what is meant by "intense vibration" as the term is used herein. It is determined empirically by vibration of the whole mould for precast articles, not just minor surface vibration, to the extent that in a closed vertical mould, for example, excess liquid or binder rises to the top to form a layer of approximately 0.64 cm to 5.1 cm deep. In a horizontal open mould or in cast-in-place applications, the top surface area will be very much greater than in the closed vertical mould and the layer which accumulates on the top on intense vibration may be as low as for example 0.16 cm in depth. The accumulated layer from vertical closed mould casting can be cut off the edge of even very large panels if necessary or desirable. The top resin layer formed in open moulding, which process is suitable for the manufacture of furniture or other such articles, can be arranged to be the underside or the back of the object and thus visually unimportant and need not be removed as such articles are not subject to great stress:

The intense vibration causing "segregation" as described also removes any significant amounts of voids in the mix, that is spaces or gaps between aggregate particles are reduced to a minimum.

Various vibrating devices can be used depending on the manner of manufacture of the concrete. For example with moulds for precast concrete table vibrators can be used whereas for cast-in-place applications internal vibrating devices are appropriate. In fact any type of vibration may be used and any frequency, even mechanical shock, as long as it is intense enough to fulfil the degree of segregation of components or "setting" of aggregates as already described. Preferably, however, vibration of high amplitude and low frequency is employed to encourage segregation and the time over which vibration is carried out is generally lengthy compared to the time utilised in other concrete technology. An example of suitable conditions is a closed mould containing a 909 kg panel vibrated for 5 minutes by a 6 hp. vibrator operating at 1750 cycles per minute. A suitable range of frequencies is about 1700—3600 cycles per minute.

Once the concrete mixture has been cast and vibrated, the time required for setting will of course depend on the particular initiator used and whether or not heat is applied. The time required may be anything from 5 minutes up to 3 hours or longer and the temperature may be from room temperature up to 95°C or higher.

Reinforcing materials used in conventional concrete mixes may also be used according to the present invention. These may be for example reinforcing bars or steel mesh. Also steel fibres may be used in the present compositions and can be merely mixed in with the other components, which is unlike hydraulic concretes wherein the steel fibres on mixing tend to agglomerate. Such reinforcement improves the tensile strength and impact resistance of the concrete.

The polymer bonded concretes according to the present invention can be modified as to surface appearance for various architectural uses. The surface of the concrete can be treated or etched with any solvent for the polymer binder used so that an exposed aggregate effect is obtained. A particularly useful solvent for polymethacrylate, polyacrylates or polystyrene is methylene chloride. Surface treatment of this type is normally produced in hydraulic concretes by etching with acids, retarding the surface cure of the concrete and/or by sand blasting.

A plastic-like finish on the concrete may be obtained in precast structures by applying a coating of pigmented resin in the mould prior to casting of the concrete. This surface coating adheres permanently to the concrete product. Examples of such resins are "Palatal" H-170 and "Gel-Kote" (available from Glidden Company). "Gel-Kote" is a trade mark.

The following examples are intended to be illustrative but not as limiting to the scope of the present invention.

In all the examples of the aggregates used were added to a conventional pan-type mixer, the liquid ingredients except for initiator then added, followed by the other dry ingredients and finally the initiator. Mixing was continued for two minutes and the mix then transferred to a closed 2.79 m² (30 square foot) mould. Vibration was carried out for two minutes using a 1 1/2 horse power reciprocal vibrator operating at a frequency of 3450 rpm. The conditions of curing or setting are detailed in each example.

**Example 1**

A polymer concrete according to the invention was prepared using the following components:

| | |
|---|---|
| Polyester resin 72% styrene 28% ("Palatal" H-170) | 3.5% |
| Methyl methacrylate | 3.1% |
| Bis-4-tertbutylcyclohexyl peroxydicarbonate | 0.08% |
| Silica flour (>200 mesh) | 12.6% |
| Ottawa silica (27 mesh) | 21.2% |
| Round quartz aggregates (3—10 mm) | 58.8% |
| Titanium dioxide | 0.8% |
| % Organic: | 6.7 |
| Heat cure: | (1/2 hour at 79°C) |
| Thickness of casting: | ≥1.9 cm |
| Compressive strength: (ASTM C 39-73) | 13,500 psi (945 kg/cm²) |
| Flexural strength: (ASTM C 78-75) | 2,750 psi (192.5 kg/cm²) |
| Modulus of elasticity: (ASTM C 469-65) | 6.6×10⁶ psi (46.2×10⁴ kg/cm²) |

**Example 2**

The following components were used in preparation of a polymer concrete according to the invention:

| | |
|---|---|
| Methyl methacrylate | 5.7% |
| Bis-4-tertbutylcyclohexyl peroxydicarbonate | 0.05% |
| Titanium dioxide | 0.25% |
| Calcium carbonate 250 mesh+ | 12.00% |
| Calcium carbonate 50—500 mesh | 14.00% |
| Aggregates (3 to 25 mm) | 67.20% |
| % Organic: | 5.8% |
| Heat cure: | (1 hour at 71°C) |
| Thickness of casting: | ≥5.1 cm |

**Example 3**

The following components were used:

| | |
|---|---|
| Polyester resin 72%, styrene 28% ("Palatal" H-170) | 3.20% |
| Butyl acrylate | 1.60% |
| Methyl methacrylate | 1.60% |
| Silica flour* (200 mesh) | 12.00% |
| Ottawa silica (27 mesh) | 32.00% |
| Round quartz aggregates (3—19 mm) | 49.00% |

8

| Titanium dioxide | 0.13% |
| N,N-Diethyl-m-toluidine | 0.04% |
| N,N-Dimethylaniline | 0.08% |
| Benzoyl peroxide 70% (granules) | 0.25% |
| % Organic: | 6.77 |
| Room temperature cure: | (3 hours at 21°C) |
| Thickness of casting: | ≥5.1 cm |

* 7.8% retained on 200 mesh; 12.9% retained on 270 mesh; 11.1% retained on 325 mesh, pan: 66.7%.

Example 4

This concrete was prepared from the following:

| Polyester resin 72%, styrene 28% ("Palatal" H-170) | 2.5% |
| Methyl methacrylate | 2.5% |
| Bis-4-tertbutylcyclohexyl peroxydicarbonate | 0.1% |
| Silica flour (>200 mesh) | 12.9% |
| Ottawa flour (27 mesh) | 21.9% |
| Round quartz aggregates (3—9 mm) | 59.7% |
| Titanium dioxide | 0.4% |
| % Organic: | 5.1 |
| Heat cure: | (3/4 hour at 79°C) |
| Thickness of casting: | ≥5.1 cm |

This example was also repeated using only styrene in place of methyl methacrylate with comparable results.

Example 5

The following were used to prepare a concrete mix:

| Polyester resin 72%, styrene 28% ("Palatal" H-170) | 3.3% |
| Methyl methacrylate | 2.7% |
| Bis-4-tertbutylcyclohexyl peroxydicarbonate | 0.6% |
| Silica flour (>200 mesh) | 10.0% |
| Ottawa silica (27 mesh) | 15.0% |
| Round quartz aggregates (3 to 10 mm) | 68.5% |
| Iron oxide colour | 0.5% |
| % Organic: | 6.1 |
| Heat cure: | (15 minutes at 93°C) |
| Thickness of casting: | ≥2.5 cm |

Example 6
The following ingredients were mixed and cured:

| | |
|---|---|
| Polyester resin 72%, styrene 28% ("Palatal" H-170) | 2.9% |
| Methyl methacrylate | 2.9% |
| Bis-4-tertbutylcyclohexyl peroxydicarbonate | 0.06% |
| Silica flour (>200 mesh) | 3.8% |
| Aluminium hydrate (average 100 mesh) | 10.0% |
| Ottawa silica (27 mesh) | 16.2% |
| Round quartz aggregates (3 to 13 mm) | 64.0% |
| Titanium dioxide | 0.2% |
| % Organic: | 5.9 |
| Heat cure: | (1 hour at 73.9°C) |
| Thickness of casting: | 5.1 cm |

Example 7
A concrete was prepared from the following:

| | |
|---|---|
| Polyester resin 72%, styrene 28% ("Palatal" H-170) | 3.3% |
| Methyl methacrylate | 3.3% |
| Bis-4-tertbutylcyclohexyl peroxydicarbonate | 0.1% |
| Silica flour (>200 mesh) | 6.0% |
| Aluminium hydrate (average 100 mesh) | 13.4% |
| Ottawa silica (27 mesh) | 15.2% |
| Round quartz aggregates (3 to 13 mm) | 57.46% |
| Titanium dioxide | 0.14% |
| Molybdate orange | 1.12% |
| % Organic: | 6.7 |
| Heat cure: | (1/2 hour at 79.4°C) |
| Thickness of casting: | ≤5.1 cm |

The polymer concretes of Examples 2—7 had properties very similar to those of the concrete of Example 1, for instance compressive strengths of the order of 13,500 psi (945 kg/cm²).

It was found that the properties of the concretes of the foregoing Examples did not vary to any significant degree for the binder proportions specified.

As an indication of the fire resistant properties of polymer concretes as illustrated in Examples 6 and 7, a concrete made from the components as listed in Example 7 but without the molybdate orange colouring was found not to give off smoke or flame during decomposition by a 1427°C heat source. Smoke emission according to ASTM D2843 was 1% while a test for fire resistance (ASTM D2863) resulted in an oxygen index of over 80.

All of the foregoing examples of polymer bonded concrete according to the invention may be used for precast panels for fascia panels for buildings having thicknesses of 0.94 cm to 10.16 cm, patio slabs, concrete flower boxes, garden furniture, load bearing or non-load bearing sandwich panels using urethane foam sandwich between two slabs of polymer concrete adhered both mechanically and chemically, wall cladding 0.95—2.54 cm thick to replace conventional lath and stucco systems, plywood and aluminium and steel siding, and the like.

The polymer bonded concretes of Example 1, 3, 4 and 5 are particularly suitable for the manufacture of drain, sewer and other pipes because of chemical and abrasion resistance. These polymer concretes are also of use for chemically resistant articles such as pump motor boxes, storage tanks and basis, floor slabs and tiles.

The polymer concrete of Example 1 has been used in the form of panels to protect the sides, undersides, or supporting pillars of elevated highways because of its extremely high chemical resistance. This concrete has also been used as permanent, white, impervious forms for highway median strips, these forms being thin shells utilising regular hydraulic concrete as filler.

The polymer concrete of Example 4 is abrasion resistant and is particularly suitable for the manufacture of railroad ties and tracks for rubber tired subway cars.

The polymer concretes of Examples 6 and 7 are particularly suitable for the manufacture of fire resistant panels and the like because of the low binder content and inclusion of aluminium hydrate.

## Claims

1. A process for the preparation of a polymer bonded concrete formed of mineral aggregate bonded with less than 10% by weight organic binder and comprising mixing the aggregate with liquid binder composition comprising polymerisable material and free radical polymerisation initiator, casting the resultant mixture and polymerising the polymerisable material, characterised in that the polymerisable material is a liquid α,β-ethylenically unsaturated monomer and, optionally a liquid unsaturated polyester resin in an amount such that there is more monomer than is required for cross-linking the polyester resin, and while the polymerisable material is still substantially unpolymerised the cast mixture is subjected to intense vibration, and in which the viscosity of the liquid binder is sufficiently low and the vibration is sufficiently intense that liquid binder separates from the aggregate and a layer of liquid binder forms on the upper surface of the mixture.

2. A process according to claim 1 characterized in that the mixture contains from 3 to 10% by weight of the liquid binder composition and the liquid binder composition consists substantially only of the initiator and the polymerisable material or materials.

3. A process according to claim 1 or claim 2 characterised in that the liquid binder composition has a viscosity below 50 mPa . s (50 cps), preferably below 1 mPa . s (1 cps).

4. A process according to any preceding claim characterised in that the vibration is a high amplitude and low frequency vibration.

5. A process according to any preceding claim characterised in that the mixture is cast in a substantially closed mould and the whole mould is subjected to the vibration.

6. A process according to any preceding claim characterised in that the mixture is heated after the vibration to a temperature which is preferably below 95°C and which causes polymerisation of the polymerisable materials.

7. A process according to any preceding claim characterised in that the amount of polymerisable material is from 3 to 10%, preferably 5 to 10%, and the liquid binder composition is a low viscosity composition comprising an unsaturated polyester resin dissolved in styrene monomer and containing additional monomer in excess of that required for cross-linking of the polyester, the additional monomer being selected from styrene, methyl methacrylate and butyl acrylate, and after the intense vibration the polymerisable material is caused to polymerise by application of heat preferably to a temperature up to 95°C.

8. A process according to claim 7 characterised in that the amount of polyester is not greater than 50%, preferably not greater than 40%, by weight polymerisable material.

9. A process according to any of claims 1 to 7 characterised in that the amount of polymerisable material is from 3 to 7%, preferably 5 to 7%, and the polymerisable material comprises methyl methacrylate, and after the intense vibration the polymerisable material is caused to polymerise by application of heat to a temperature of up to 95°C.

10. A process according to any of claims 7 to 9 in which the initiator is bis-6-tert-butylcyclohexyl peroxydicarbonate.

11. A process according to any preceding claim characterised in that the aggregate is formed of sand, stone or gravel or a mixture thereof.

12. A process according to any preceding claim characterised in that the mixture also includes filler of finer particle size than the aggregate.

13. A process according to any preceding claim characterised in that the mixture also includes a fire retardant material in an amount of 20 to 200% based on the weight of binder, the fire retardant material preferably being selected from alumina trihydrate and zinc borate.

## Patentansprüche

1. Ein Verfahren zur Herstellung eines polymergebundenen Betons, der aus einem mit weniger als 10 Gew.-% organischem Bindemittel gebundenen Mineralaggregat gebildet ist, umfassen ein Vermischen des Aggregats mit einer polymerisierbares Material und freiradikalischen Polymerisationsinitiator umfassenden flüssigen Bindemittelzusammensetzung, ein Vergießen des gebildeten Gemisches und ein Polymerisieren des polymerisierbaren Materials, dadurch gekennzeichnet, daß das polymerisierbare Material ein flüssiges α,β-ethylenisch ungesättigtes Monomer und gewünschtenfalls ein flüssiges ungesättigtes Polyesterharz in einer solchen Menge ist, daß mehr Monomer vorliegt, als zum Vernetzen des Polyesterharzes erforderlich ist, und daß das vergossene Gemisch, während das polymerisierbare Material noch im wesentlichen unpolymerisiert ist, einer intensiven Vibration unterworfen wird, und in welchem Verfahren die Viskosität des flüssigen Bindemittels ausreichend niedrig und die Vibration ausreichend intensiv ist, daß sich flüssiges Bindemittel von dem Aggregat trennt und auf der Oberseite des Gemisches eine Schicht aus flüssigem Bindemittel ausbildet.

2. Ein Verfahren nach Anspruch 1, dadurch gekennzeichnet, daß das Gemisch von 3 bis 10 Gew.-% flüssige Bindemittelzusammensetzung enthält und die flüssige Bindemittelzusammensetzung im wesentlichen nur aus dem Initiator und dem bzw. den polymerisierbaren Material bzw. Materialien besteht.

3. Ein Verfahren nach Anspruch 1 oder 2, dadurch gekennzeichnet, daß die flüssige Bindemittelzusammensetzung eine Viskosität unter 50 mPa . s (50 cps), vorzugsweise unter 1 mPa . s (1 cps) aufweist.

4. Ein Verfahren nach einem der vorstehenden Ansprüche, dadurch gekennzeichnet, daß die Vibration eine solche mit großer Amplitude und niedriger Frequenz ist.

5. Ein Verfahren nach einem der vorstehenden Ansprüche, dadurch gekennzeichnet, daß das Gemisch in eine im wesentlichen geschlossene Form gegossen wird und die ganze Form der Vibration unterworfen wird.

6. Ein Verfahren nach einem der vorstehenden Ansprüche, dadurch gekennzeichnet, daß das Gemisch nach der Vibration auf eine Temperatur erwärmt wird, welche vorzugsweise unter 95°C liegt und welche eine Polymerisation der polymerisierbaren Materialien bewirkt.

7. Ein Verfahren nach einem der vorstehenden Ansprüche, dadurch gekennzeichnet, daß die Menge an polymerisierbarem Material von 3 bis 10%, vorzugsweise 5 bis 10% beträgt und die flüssige Bindemittelzusammensetzung eine niedrigviskose Zusammensetzung ist, welche ein in Styrolmonomer gelöstes ungesättigtes Polyesterharz umfaßt und zusätzliches Monomer im Überschuß über jenes enthält, das zum Vernetzen des Polyesters erforderlich ist, wobei das zusätzliche Monomer unter Styrol, Methylmethacrylat und Butylacrylat ausgewählt ist, und daß nach der intensiven Vibration das polymerisierbare Material durch Erwärmung, vorzugsweise auf eine Temperatur von bis zu 95°C, zum Polymerisieren gebracht wird.

8. Ein Verfahren nach Anspruch 7, dadurch gekennzeichnet, daß die Menge an Polyester nicht größer als 50%, vorzugsweise nicht größer als 40%, bezogen auf das Gewicht des polymerisierbaren Materials, ist.

9. Ein Verfahren nach einem der Ansprüche 1 bis 7, dadurch gekennzeichnet, daß die Menge an polymerisierbarem Material von 3 bis 7%, vorzugsweise 5 bis 7%, beträgt und das polymerisierbare Material Methylmethacrylat umfaßt, und daß nach der intensiven Vibration das polymerisierbarem Material durch Erwärmung auf eine Temperatur von bis zu 95°C zum Polymerisieren gebracht wird.

10. Ein Verfahren nach einem der Ansprüche 7 bis 9, in welchem der Initiator Bis-6-tert-butyl-cyclohexylperoxydicarbonat ist.

11. Ein Verfahren nach einem der vorstehenden Ansprüche, dadurch gekennzeichnet, daß das Aggregat aus Sand, Steinen oder Kies oder einem Gemisch hievon gebildet wird.

12. Ein Verfahren nach einem der vorstehenden Ansprüche, dadurch gekennzeichnet, daß das Gemisch auch ein Füllmaterial von kleinerer Teilchengröße als das Aggregat einschließt.

13. Ein Verfahren nach einem der vorstehenden Ansprüche, dadurch gekennzeichnet, daß das Gemisch auch ein feuerhemmendes Material in einer Menge von 20 bis 200%, bezogen auf das Gewicht des Bindemittels, einschließt, wobei das feuerhemmende Mittel unter Aluminiumoxidtrihydrat und Zinkborat ausgewählt wird.

**Revendications**

1. Un procédé pour la préparation d'un béton lié par un polymère formé d'un granulat minéral lié avec moins de 10% en poids d'un liant organique et consistant à mélanger le granulat avec une composition liante liquide comprenant une matière polymérisable et un amorceur de polymérisation radicalaire, couler le mélange obtenu et polymériser la matière polymérisable, caractérisé en ce que la matière polymérisable est un monomère liquide à insaturation $\alpha,\beta$-éthylénique et, éventuellement, une résine de polyester insaturé liquide en une quantité telle qu'il y ait plus de monomère qu'il n'en faut pour la réticulation de la résine de polyester, et, alors que la matière polymérisable est encore essentiellement non polymérisée, le mélange coulé est soumis à un vibrage intense, et en ce que la viscosité du liant liquide est suffisamment faible et le vibrage est suffisamment intense pour que le liant liquide se sépare du granulat et qu'une couche de liant liquide se forme sur la surface supérieure du mélange.

2. Un procédé selon la revendication 1, caractérisé en ce que le mélange contient de 3 à 10% en poids de la composition liante liquide et la composition liante liquide est constituée essentiellement uniquement de l'amorceur et de la ou les matières polymérisables.

3. Un procédé selon la revendication 1 ou la revendication 2, caractérisé en ce que la composition liante liquide a une viscosité inférieure à 50 mPa . s (50 cP), de préférence inférieure à 1 mPa . s (1 cP).

4. Un procédé selon l'une quelconque des revendications précédentes, caractérisé en ce que le vibrage est un vibrage à grande amplitude et faible fréquence.

5. Un procédé selon l'une quelconque des revendications précédentes, caractérisé en ce que le mélange est coulé dans un moule essentiellement fermé et la totalité du moule est soumise au vibrage.

6. Un procédé selon l'une quelconque des revendications précédentes, caractérisé en ce que le mélange est chauffé après le vibrage à une température qui est de préférence inférieure à 95°C et qui provoque la polymérisation des matières polymérisables.

7. Un procédé selon l'une quelconque des revendications précédentes, caractérisé en ce que la quantité de matière polymérisable est de 3 à 10%, de préférence de 5 à 10%, et la composition liante liquide est une composition à faible viscosité comprenant une résine de polyester insaturé dissoute dans du styrène monomère et contenant un monomère additionnel en excès de ce que nécessite la réticulation du polyester, le monomère additionnel étant choisi parmi le styrène, le méthacrylate de méthyle et l'acrylate de butyle, et, après le vibrage intense, la matière polymérisable est amenée à se polymériser par application de chaleur, de préférence à une température d'au plus 95°C.

8. Un procédé selon la revendication 7, caractérisé en ce que la quantité de polyester ne dépasse pas 50%, de préférence ne dépasse pas 40%, du poids de la matière polymérisable.

9. Un procédé selon l'une quelconque des revendications 1 à 7, caractérisé en ce que la quantité de matière polymérisable est de 3 à 7%, de préférence de 5 à 7%, et la matière polymérisable comprend du méthacrylate de méthyle et, après le vibrage intense, la matière polymérisable est amenée à se polymériser par application de chaleur à une température d'au plus 95°C.

10. Un procédé selon l'une quelconque des revendications 7 à 9, dans lequel l'amorceur est le peroxydicarbonate de bis-6-tert-butylcyclohexyle.

11. Un procédé selon l'une quelconque des revendications précédentes, caractérisé en ce que le granulat est formé de sable, de pierres ou de graviers ou d'un de leurs mélanges.

12. Un procédé selon l'une quelconque des revendications précédentes, caractérisé en ce que le mélange comprend également une charge constituée de particules de taille plus petite que le granulat.

13. Un procédé selon l'une quelconque des revendications précédentes, caractérisé en ce que le mélange contient également une matière ignifuge en une quantité de 20 à 200% par rapport au poids du liant, la matière ignifuge étant de préférence choisie parmi l'alumine trihydratée et le borate de zinc.